# EUROPÄISCHE PATENTSCHRIFT

(11) **EP 1 161 675 B1**
(45) Veröffentlichungstag und Bekanntmachung des Hinweises auf die Patenterteilung: **19.05.2004**
(21) Anmeldenummer: 00901117.2
(22) Anmeldetag: 20.01.2000
(51) Int. Cl.: G01N 21/35, G01N 21/61, G01M 3/38

(54) **INFRAROT-GASANALYSATOR UND VERFAHREN ZUM BETRIEB DIESES ANALYSATORS**
INFRARED GAS ANALYZER AND METHOD FOR OPERATING SAID ANALYZER
ANALYSEUR DE GAZ A INFRAROUGE ET PROCEDE POUR FAIRE FONCTIONNER CE DERNIER

(30) Priorität: 13.03.1999 DE 19911260
(43) Veröffentlichungstag der Anmeldung: 12.12.2001
(73) Patentinhaber: Inficon GmbH, 50968 Köln (DE)
(72) Erfinder: GROSSE BLEY, Werner, D-53125 Bonn (DE); VOSS, Günter, D-53804 Much (DE); DÖBLER, Ulrich, D-42929 Wermelskirchen (DE); BÖHM, Thomas, D-50859 Köln (DE)
(74) Vertreter: Leineweber, Jürgen, Dipl.-Phys.
(86) Internationale Anmeldenummer: PCT/EP2000/000407
(87) Internationale Veröffentlichungsnummer: WO 2000/055603

(56) Entgegenhaltungen:
- DE-A- 19 735 599
- GB-A- 2 228 568

## Beschreibung

Die Erfindung bezieht sich auf einen Infrarot-Gasanalysator, insbesondere zur Verwendung als Gasdetektor bei der Schnüffellecksuche, mit einer vom Messgas durchströmten Küvette (Mess-Küvette), mit einer IR-Lichtquelle, die die Mess-Küvette durchsetzendes IR-Licht erzeugt, und mit einem Detektor, der die Messung der IR-Lichtabsorption im Messgas erlaubt. Außerdem bezieht sich die Erfindung auf ein Verfahren zum Betrieb eines Gasanalysators dieser Art.

Die Schnüffellecksuche wird häufig bei Prüflingen eingesetzt, die Kältemittel oder Kohlenwasserstoffe enthalten (z.B. Kühlschrankkondensatoren). Bei dieser Art der Lecksuche dienen die im Prüfling vorhandenen Medien als Test- oder Messgase. Ist ein Leck vorhanden, gelangen geringe Mengen des jeweiligen Messgases über den Schnüffelschlauch zu einem Gasdetektor, der so ausgebildet ist, dass er diese Gase erkennen kann.

Bei der Schnüffellecksuche besteht das Problem, dass von der Schnüffelspitze nicht nur aus einem eventuell vorhandenen Leck austretende Messgase sondern auch Gase aus der Umgebung der Schnüffelspitze angesaugt werden. Enthalten diese bereits geringe Konzentrationen des Messgases, das z.B. aus früher festgestellten Lecks oder aus der Füllstation einer Produktionslinie stammen kann, so werden diese ebenfalls vom Gasdetektor registriert. Dieses kann bei hohen Messgasuntergründen zu Fehlmessungen führen, d.h., dass dichte Prüflinge als fehlerhaft "erkannt" werden.

Üblicherweise werden als Messgasdetektoren in Lecksuchern Massenspektrometer eingesetzt. Massenspektrometer besitzen zwar eine hohe Nachweisempfindlichkeit, sind aber kostspielig und wenig robust.

Bei den oben erwähnten Messgasen handelt es sich um infrarotaktive Gase, so dass als Gasdetektor auch ein Infrarot-Gasanalysator eingesetzt werden könnte. Die Infrarotabsorptionsspektroskopie ist als Verfahren zur Gasanalyse an sich bekannt (siehe z.B. Hänsel/Neumann "Physik", Spektrum Akademie Verlag, Heidelberg). Spektrografen, wie sie dort beschrieben werden, sind jedoch aufwendige und empfindliche Instrumente, die für den industriellen Alltagseinsatz nicht geeignet sind. Bekannt sind weiterhin industrielle Geräte (z.B. MULTIWARN der Firma Dräger), die jedoch für den Einsatz bei der Lecksuche um ein bis zwei Größenordnungen zu unempfindlich und/oder in Bezug auf ihre Ansprechzeit erheblich zu langsam (30 bis 60 Sekunden) sind.

Zum Stand der Technik gehört der Inhalt der DE-A-197 35 559. Es offenbart einen Infrarot-Gasanalysator mit den folgenden Merkmalen:
- Er ist mit einer vom Messgas durchströmten Mess-Küvette (2) ausgerüstet;
- er ist mit einer IR-Lichtquelle (4, 5, 42)ausgerüstet, die die Mess-Küvette (2) durchsetzendes IR-Licht erzeugt;
- er weist einen Detektor (35) auf, der die Messung der IR-Lichtabsorption im Messgas erlaubt;
- neben der vom Messgas durchströmten Mess-Küvette (2) ist eine Referenz-Küvette (3) für die Aufnahme von Referenzgas vorgesehen, der die gleiche oder eine weitere Lichtquelle (4, 5, 42) sowie der gleiche Detektor (35) zugeordnet sind;
- es sind Mittel (38, 41) vorhanden, die eine Modulation des die Küvetten (2, 3) durchsetzenden IR-Lichts bewirken;
- es sind Mittel zur Messwertbildung vorhanden.

Die Referenzküvette dieses Analysators dient jedoch nicht der Feststellung von Untergrundkonzentrationen mit dem Ziel, Fehlmessungen - insbesondere bei der Schnüffellecksuche - zu vermeiden.

Der vorliegenden Erfindung liegt die Aufgabe zugrunde, einen alltagstauglichen und kostengünstigen IR-Gasanalysator zu schaffen, der insbesondere als Gasdetektor in einem Lecksucher eingesetzt werden kann. Außerdem soll durch den Einsatz des IR-Gasanalysators erreicht werden, dass die oben geschilderten, bei der Schnüffellecksuche auftretenden Fehlmessungen vermieden werden.

Erfindungsgemäß wird diese Aufgabe bei einem Infrarot-Gasanalysator der eingangs erwähnten Art dadurch gelöst, dass neben der vom Messgas durchströmten Mess-Küvette eine Referenz-Küvette vorhanden ist, die von einem Referenzgas durchströmt ist, das in der Umgebung der Messgasansaugstelle angesaugt wird, und der die gleiche oder eine weitere Lichtquelle sowie der gleiche Detektor zugeordnet sind, dass Mittel vorhanden sind, die eine Modulation des die Küvetten durchsetzenden IR-Lichts bewirken, und dass Mittel zur Messwertbildung vorhanden sind, die eine Berücksichtigung der Untergrundsignale, die durch Messung der IR-Absorption im Gas der Referenz-Küvette gewonnen werden, bei den Signalen, die durch Messung der IR-Absorption in der Mess-Küvette gewonnen werden, ermöglichen. Dadurch, dass nicht nur Messgas, sondern auch aus der Umgebung des Schnüfflers stammendes Referenzgas untersucht wird, besteht die Möglichkeit, alle Untergrundkonzentrationen des Messgases oder störender anderer Gase bei der Messwertbildung zu berücksichtigen. Im einfachsten Falle werden die von der Untersuchung des Referenzgases stammenden Signale von den Signalen, die von der Untersuchung des Messgases stammen, subtrahiert.

Wesentlich ist, dass nur ein IR-Detektor verwendet wird, da die Rauschanteile von zwei verschiedenen Detektoren unkorreliert sind und bei der Subtraktion nicht verschwinden. Die Verwendung von einer gemeinsamen IR-Lichtquelle oder von zwei separaten Lichtquellen (für jede Küvette eine) ist möglich. Von Bedeutung ist, dass Mittel vorhanden sind, die eine Modulation des die Küvetten durchsetzenden IR-Lichts erlauben, da sonst die Verwendung nur eines Detektors nicht möglich wäre.

Weitere Vorteile und Einzelheiten der Erfindung sollen an Hand von in den Figuren 1 bis 5 schematisch dargestellten Ausführungsbeispielen erläutert werden. Es zeigen
- Figur 1 ein Ausführungsbeispiel für einen Gasanalysator nach der Erfindung,
- Figur 2 eine Alternative zur Modulation des IR-Lichtes nach Figur 1,
- Figur 3 ein Beispiel für ein Zweistrahlrohr, das jeweils eine Mess- und eine Referenz-Küvette bildet,
- Figur 4 eine Alternative zur Fokussierung des Lichts der beiden Küvetten auf den gemeinsamen Detektor und
- Figur 5 Beispiele für infrarot-aktive Gase, die mit dem erfindungsgemäßen Analysator nachweisbar sind.

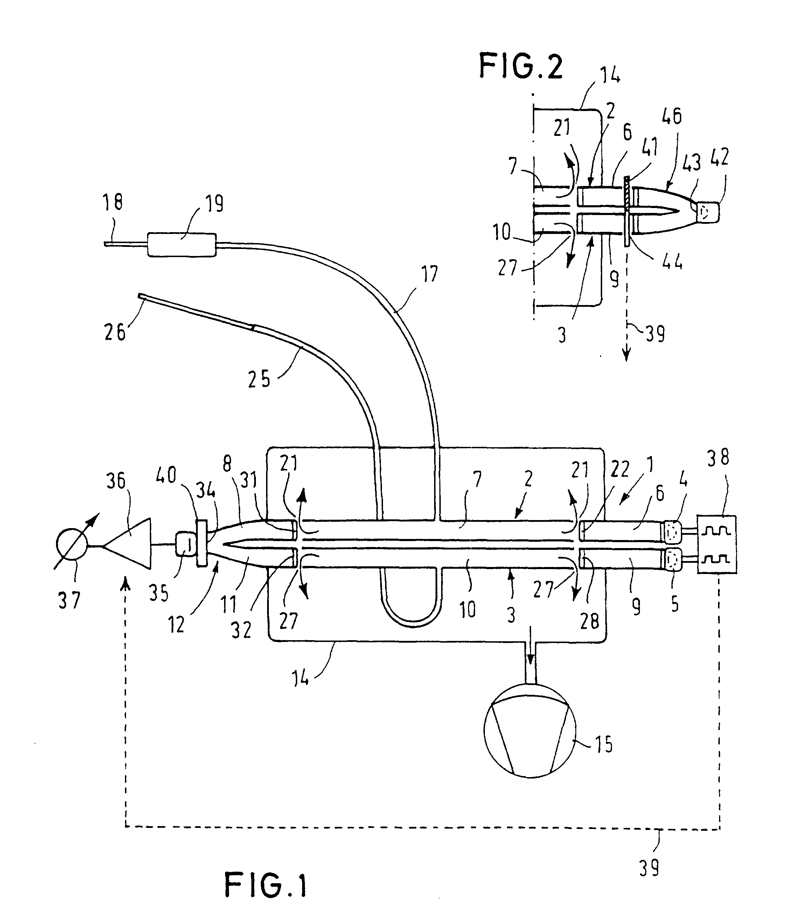

Der Infrarot-Gasanalysator 1 nach Figur 1 umfasst zwei Küvetten 2 und 3, denen jeweils eine IR-Lichtquelle 4 bzw. 5 zugeordnet ist. Als Lichtquellen kommen IR-Quellen mit geringer thermischer Zeitkonstante in Frage, die insbesondere als Dünnschichtstrahler ausgebildet werden. Ein Beispiel ist die Type SVF350-5M3 der Firma CAL-Sensors.

Die Küvetten bestehen jeweils aus drei Abschnitten 6, 7, 8 bzw. 9, 10, 11. Die jeweils mittleren Abschnitte 7, 10 befinden sich innerhalb einer abgeschlossenen Kammer 14, an die die Vakuumpumpe 15 (vorzugsweise eine Membranpumpe) angeschlossen ist.

Beim dargestellten Ausführungsbeispiel ist die Küvette 2 die Mess-Küvette. Ihr mittlerer Abschnitt ist vom Messgas durchströmt. Dazu ist an diesen Abschnitt - zum Beispiel etwa in seiner Mitte - ein Messgaszuleitung (Schlauchleitung 17) angeschlossen, die mit einer Schnüffelspitze 18 mit Handstück 19 in Verbindung steht. Zum Beispiel im Bereich der beiden Enden des Abschnittes 7 befinden sich Öffnungen 21 (die beispielsweise als Spalte zwischen den Abschnitten ausgeführt sein können), die in die Kammer 14 münden, so dass der Abschnitt 7 während des Betriebs vom Messgas durchströmt ist. Die Vakuumpumpe 15 dient der Aufrechterhaltung dieses Gasstromes. Zusätzlich könnte im Handstück 19 eine Förderpumpe angeordnet sein.

Der Abschnitt 6 der Mess-Küvette 2 ist der IR-Lichtquelle vorgelagert und ragt in die Kammer 14 hinein. Sein dem Abschnitt 7 zugewandten Ende ist mit einem IR-lichtdurchlässigen, aber gasdicht eingesetzten Fenster 22 ausgerüstet. Die Aufrechterhaltung des Druckes in der Kammer 14 ist dadurch sichergestellt.

Die Referenz-Küvette 3 ist ähnlich aufgebaut. Unterschiedlich ist, dass ihr mittlerer Abschnitt 10 an eine Schlauchleitung 25 angeschlossen ist, deren Ansaugöffnung 26 Gas aus der Umgebung der Schnüffelspitze 18 aufnimmt. Die in die Kammer 14 mündenden Öffnungen des Abschnittes 10 sind mit 27, das IR-lichtdurchlässige Fenster des Abschnittes 9 mit 28 bezeichnet.

Die Abschnitte 8 und 11 der beiden Küvetten 2 und 3 sind gegenüber dem Inneren der Kammer 14 mit IR-lichtdurchlässigen Fenstern 31, 32 abgedichtet. Außerhalb der Kammer 14 sind sie derart ausgebildet, dass sie eine Fokussiereinrichtung 12 bilden, mit der die Lichtstrahlen aus den beiden Einzelküvetten 2, 3 auf eine Detektorfläche konzentriert werden. Beim Ausführungsbeispiel nach Figur 1 enden die beiden Küvetten mit kontinuierlich sich nähernden Achsen in einer gemeinsamen Öffnung 34. Dieser Öffnung 34 ist ein Infrarot-Detektor 35 vorgelagert, so dass mit diesem Detektor 35 IR-Absorptionsmessungen in beiden Küvetten 2 und 3 möglich sind. Der Detektor wird vorzugsweise licht- und gasdicht an die Austrittsöffnung der zusammengeführten Küvetten angesetzt, so dass er gegen Störeinflüsse aus der Umgebung weitgehend geschützt ist. Als preiswerter und auch im mittleren Infrarot einsetzbarer Detektor eignet sich z.B. die Type LHi807TC der Firma Heimann, der gleich mit integrierter Temperaturkompensation geliefert wird. An den Detektor 35 schließen sich ein Verstärker 36 und ein Mess-/Anzeigegerät 37 an.

Um die IR-Absorptionsmessungen in den beiden Küvetten 2 und 3 nacheinander durchführen zu können, ist eine Modulation des durch die Küvetten hindurchtretenden IR-Lichts erforderlich. Dazu ist beim Ausführungsbeispiel nach Figur 1 ein Frequenzgenerator 38 vorgesehen, der mit den beiden IR-Lichtquellen 4 und 5 in Verbindung steht und diese moduliert. Der Frequenzgenerator 38 erzeugt periodische Rechtecksignale, die um 180° phasenverschoben den Lichtquellen 4 und 5 zugeführt werden. Der Frequenzgenerator 38 ist weiterhin über die Leitung 39 mit dem Verstärker 36 verbunden, um die Lock-in-Messtechnik anwenden zu können. Diese Messtechnik ist an sich bekannt. Sie ermöglicht es, "verrauschte" Signale durch Modulation des Nutzsignales und anschließender phasenempfindlicher Gleichrichtung mit hoher Empfindlichkeit nachweisen zu können.

Eine andere Möglichkeit der Modulation des IR-Lichts besteht darin, einen mechanischen Chopper 41 zu verwenden (Fig. 2). Diese Lösung hat den Vorteil, dass nur eine Lichtquelle 42 nötig ist. Dazu sind die beiden Abschnitte 6 und 9 der beiden Küvetten 2 und 3 ebenfalls derart ausgebildet, dass sie in einer gemeinsamen Öffnung 43 enden, welcher die Lichtquelle 42 vorgelagert ist. Weiterhin sind die Abschnitte 6 und 9 außerhalb der Kammer 14 unterbrochen. Im dadurch gebildeten Spalt 44 befindet sich der Chopper 41, der den periodisch wechselnden Durchtritt des IR-Lichtes durch die Küvetten 2 und 3 regelt. Mit dem Chopper 41 kann ebenfalls ein Referenzsignal erzeugt werden, das über die Leitung 39 dem Lock-in-Verstärker 36 zugeführt wird.

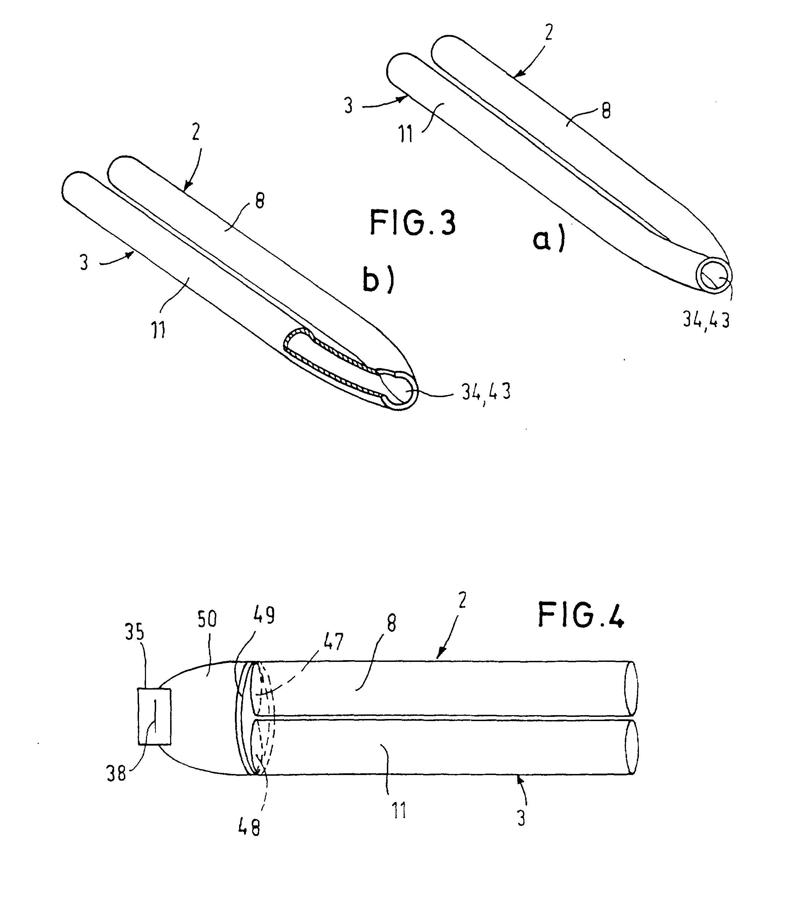

Figur 3 zeigt ein Ausführungsbeispiel für ein Zweistrahlrohr, dessen Struktur die Verwendung als Messund Referenzküvette 2 bzw. 3 erlaubt. Die Herstellung erfolgt in der Weise, dass die Enden der Einzelrohre zunächst gebogen und anschließend derart gefräst werden, dass beim Zusammenfügen der Enden der Einzelrohre eine gemeinsame Öffnung 34 bzw. 43 entsteht. Die beiden Rohre bestehen zweckmäßig aus gepresstem oder gezogenen Aluminium, deren Innenwandungen zusätzlich mit einem besonders gut reflektierenden Metall beschichtet sein können.

Bei der Ausführung des IR-Gasanalysators nach Figur 1 ist nur ein Endbereich des Doppelrohres in der beschriebenen Weise ausgebildet. Beim Ausführungsbeispiel nach Figur 2 müssen beide Endbereich diese Gestaltung haben. Im Bereich einer gemeinsamen IR-Lichtquelle 42 (Fig. 2) hat die beschriebene Aufspaltung in zwei Rohre die Wirkung eines Strahlteilers 46. Jeder der Teilstrahlen erreicht im Bereich der wieder zusammenführenden Rohre den Detektor 35.

Anstelle der beim Ausführungsbeispiel nach Figur 1 beschriebenen Fokussiereinrichtung 12 kann auch ein Parabolspiegel verwendet werden, dessen Brennpunkt im wesentlichen in der Detektornachweisfläche liegt. Figur 4 zeigt ein Ausführungsbeispiel für eine solche Lösung. Den beiden Küvettenaustrittsöffnungen 47,48, die mit einem gemeinsamen infrarotlichtdurchlässigen, gasdichten Fenster 49 verschlossen sind, ist der Parabolspiegel 50 vorgelagert. Sein Brennpunkt liegt in der Detektornachweisfläche 38 des Detektors 35. Der Parabolspiegel 50 ist zweckmäßig ein Kunststoffteil, das mit Gold, Silber oder Aluminium reflektierend beschichtet ist und das einerseits an die Küvettenausgänge 47,48, andererseits an den Detektor im Durchmesser angepasst ist. Der Detektor 35 ist auch hier licht- und gasdicht an die Austrittsöffnung des Parabolspiegels 50 angesetzt, der seinerseits mit dem IR-lichtdurchlässigen Fenster 49 gasdicht gegenüber der Vakuumkammer 14 abgeschlossen ist.

Mit den beschriebenen Ausführungsbeispielen für einen erfindungsgemäß ausgebildeten IR-Sensor kann eine Nachweisempfindlichkeit von weniger als 1 ppm bei einer Ansprechzeit von ca. 1 sec. erreicht werden. IR-Sensoren dieser Art sind robust und damit im industriellen Alltagsbetrieb einsetzbar. Die Küvetten sind ohne großen Aufwand herstellbar, so dass sie als einfach auswechselbares und preiswertes Verschleißteil bereitgestellt werden können. Dieses ist bei zunehmenden Verschmutzungen von besonderer Bedeutung.

Der erfindungsgemäße Analysator ist bei infrarot-aktiven Gasen einsetzbar. Dadurch, dass eine Referenzküvette verwendet wird, besteht die Möglichkeit, das Untergrundsignal der Umgebungsatmosphäre, die auch andere Gase enthalten kann, vom Gesamtsignal zu subtrahieren.

Um auch bei der Subtraktion von zwei großen Signalen ein auswertbares messsignal (Differenzsignal) zu erhalten, wird ein Infrarotfilter verwendet, das für den Teil des Spektrums durchlässig ist, in dem das Prüfgas eine hohe Absorption aufweist.

Da Infrarotfilter mit den verschiedensten Bandbreiten zur Verfügung stehen, können je nach Wahl der Bandbreite die Eigenschaften des Gasanalysators variiert werden. Wird z.B. ein sehr schmalbandiges Filter benutzt und hat ein Messgas in diesem Bereich eine Absorptionslinie, dann kann genau dieses Gas nachgewiesen werden. Wird ein sehr breitbandiges Filter eingesetzt, so kann quasi jedes Gas, das aus dem Leck entweicht, detektiert werden, wenn es wenigstens eine Absorptionslinie in dem großen Filterbandbereich besitzt. Bei Wahl eines geeigneten Filters mittlerer Bandbreite, können einige, wenige Prüfgase nachgewiesen werden; nämlich genau die, die eine Absorptionslinie in dem ausgewählten Filterbandbereich besitzen. Das die Eigenschaften des Analysators bestimmende Filter ist zweckmäßig dem Detektor 35 unmittelbar vorgelagert. Es ist in Figur 1 schematisch dargestellt und mit 40 bezeichnet.

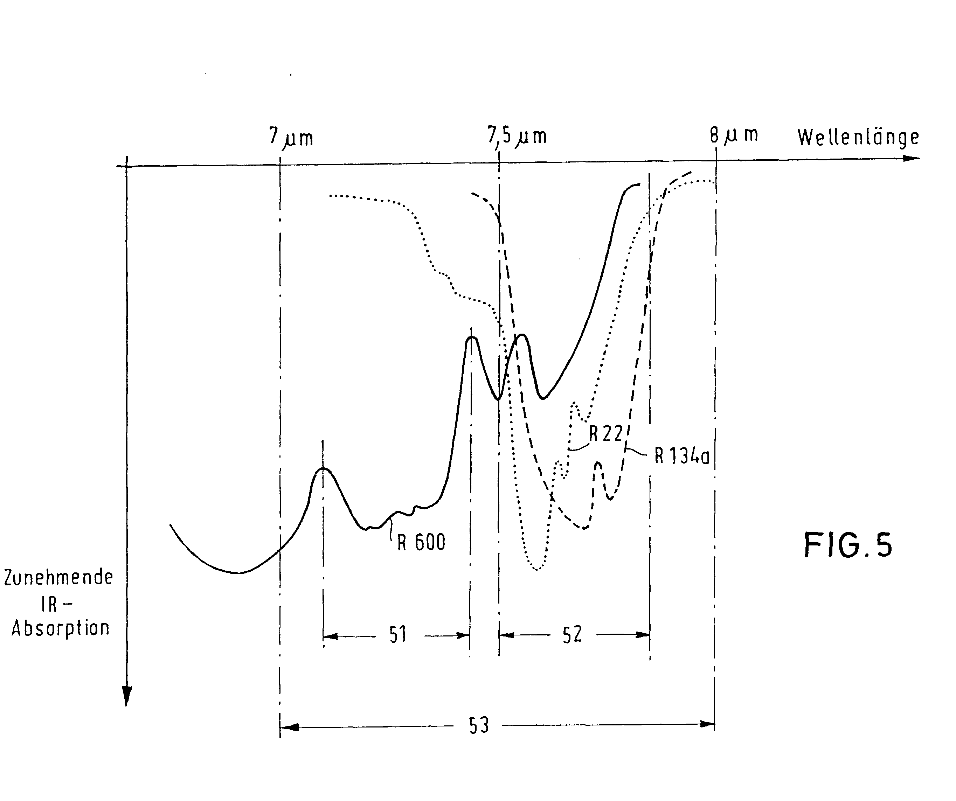

In Figur 5 ist beispielsweise die IR-Adsorption von drei verschiedenen Kältemitteln (R22, R134a, R600) im Bereich von 7 µm bis 8 µm Wellenlänge dargestellt. Die Eigenschaften von IR-Filtern mit verschiedenen Bandbreiten sind durch senkrechte strichpunktierte oder gestrichelte Linien und Doppelpfeile wiedergegeben.

Für den alleinigen Nachweis von R600 wird beispielsweise ein relativ schmalbandiges IR-Filter verwendet, dessen Eigenschaften durch den Doppelpfeil 51 gekennzeichnet sind. Nur R600 hat im Bandbereich dieses IR-Filters eine hohe Absorption.

Ein relativ schmalbandiges Filter für den Nachweis von vorzugsweise R22 oder R134a ist durch den Doppelpfeil 52 gekennzeichnet. Sollen sowohl R600 als auch R22 und R134a nachweisbar sein, kann ein Filter mit mittlerer Bandbreite, gekennzeichnet durch den Doppelpfeil 53, verwendet werden. Allerdings kann bei einem Infrarotnachweis dieser Art keine Aussage darüber gewonnen werden, welches der verschiedenen Gase gerade detektiert wird.

Ein Beispiel für ein IR-Filter, das für die in Fig. 5 dargestellten Gase einsetzbar ist, ist das Filter FC-70520U der Firma LOT Oriel mit einer Zentralwellenlänge von 7,69 m (für R134a) und einer Bandbreite von 4,2%).

## Patentansprüche

1. Infrarot-Gasanalysator (1), insbesondere zur Verwendung als Gasdetektor bei der Schnüffellecksuche, mit den folgenden Merkmalen:
- Er ist mit einer vom Messgas durchströmten Mess-Küvette (2)ausgerüstet;
- er ist mit einer IR-Lichtquelle (4, 5, 42)ausgerüstet, die die Mess-Küvette (2) durchsetzendes IR-Licht erzeugt;
- er weist einen Detektor (35) auf, der die Messung der IR-Lichtabsorption im Messgas erlaubt;
- neben der vom Messgas durchströmten Mess-Küvette (2) ist eine Referenz-Küvette (3) für die Aufnahme von Referenzgas vorgesehen, der die gleiche oder eine weitere Lichtquelle (4, 5, 42) sowie der gleiche Detektor (35) zugeordnet sind;
- es sind Mittel (38, 41) vorhanden, die eine Modulation des die Küvetten (2, 3) durchsetzenden IR-Lichts bewirken;
- es sind Mittel (36) zur Messwertbildung vorhanden, die eine Berücksichtigung der Signale, die durch Messung der IR-Absorption im Gas der Referenz-Küvette (3) gewonnen werden, bei den Signalen, die durch Messung der IR-Absorption in der Mess-Küvette (2) gewonnen werden, ermöglichen;
- es ist eine Messgasansaugstelle vorgesehen, die über eine Leitung (17) mit der Mess-Küvette (2) in Verbindung steht;
- es ist eine weitere Gasansaugstelle vorgesehen, die sich in der Umgebung der Messgas-Ansaugstelle befindet und die über eine Leitung (25) mit der Referenz-Küvette (3) in Verbindung steht;
- bei den Signalen, die bei der Messung der IR-Absorption im Gas der Referenz-Küvette (3) gewonnen werden, handelt es sich um Untergrundsignale, die es ermöglichen, durch Messgase oder störende andere Gase verursachte Untergrundkonzentrationen bei der Messwertbildung aus den Signalen, die durch Messung der IR-Absorption in der Mess-Küvette (2) gewonnen werden, zu berücksichtigen.

2. Analysator nach Anspruch 1, **dadurch gekennzeichnet, dass** die Mess-Küvette (2) und die Referenz-Küvette (3) jeweils drei Längsabschnitte (6, 7, 8 bzw. 9, 10, 11) umfassen, von den sich jeweils zwei Eingangsabschnitte (6, 9) im Bereich der Lichtquelle(n) (4, 5, 42), zwei weitere detektorseitige Abschnitte (8, 11) im Bereich des Detektors (35) und zwei weitere Abschnitte (7, 10) im mittleren Bereich befinden, und dass der jeweils mittlere Längsabschnitt (7 bzw. 10) vom Messgas bzw. Referenzgas durchströmt ist.

3. Analysator nach Anspruch 2, **dadurch gekennzeichnet, dass** Leitungen (17, 25) vorgesehen sind, die der Zuführung von Messgas bzw. Referenzgas dienen, und dass Ausströmöffnungen (21 bzw. 27) vorgesehen sind, die innerhalb einer Vakuumkammer (14) münden.

4. Analysator nach Anspruch 2 oder 3, **dadurch gekennzeichnet, dass** sich im Bereich der Eingangsabschnitte (6, 9) die Mittel (38, 41) zur Modulation des die Küvetten (2, 3) durchsetzenden IR-Lichts befinden.

5. Analysator nach Anspruch 4, **dadurch gekennzeichnet, dass** jedem der Eingangsabschnitte (6, 9) der Küvetten (2, 3) eine Lichtquelle (4 bzw. 5) zugeordnet ist, und dass zur Modulation der beiden IR-Lichtquellen (4, 5) ein Frequenz-Generator (38) vorgesehen ist.

6. Analysator nach Anspruch 4, **dadurch gekennzeichnet, dass** nur eine Lichtquelle (42) vorgesehen ist, deren Licht über einen Strahlteiler (46) den Küvetten (2, 3) zugeführt wird, und dass ein mechanischer Shopper zur Modulation des IR-Lichts vorgesehen ist.

7. Analysator nach Anspruch 3 und einem der Ansprüche 4, 5 oder 6, **dadurch gekennzeichnet, dass** die Eingangsabschnitte (6, 9) in die Vakuumkammer (14) hineinragen und innen mit IR-Licht-durchlässigen Fenstern (22, 28) abgedichtet sind.

8. Analysator nach den Ansprüchen 2 und 3 und einem der Ansprüche 4-7, **dadurch gekennzeichnet, dass** die detektorseitigen Abschnitte (8, 11) der Küvetten (2, 3) ebenfalls in die Vakuumkammer (14) hineinragen und innen mit IR-Licht-durchlässigen Fenstern (31, 32) abgedichtet sind.

9. Analysator nach einem der Ansprüche 1 bis 8, **dadurch gekennzeichnet, dass** das die Küvetten (2 und 3) durchsetzende IR-Licht über eine Fokussiereinrichtung (12) auf die Detektorfläche konzentriert wird.

10. Analysator nach Anspruch 9, **dadurch gekennzeichnet, dass** als Fokussiereinrichtung (12) ein Parabolspiegel vorgesehen ist.

11. Analysator nach Anspruch 8 und 9, **dadurch gekennzeichnet, dass** die detektorseitigen Abschnitte (8, 11) der Küvetten (2, 3) zur Bildung der Fokussiereinrichtung (12) derart ausgebildet sind, dass sie mit kontinuierlich sich nähernden Achsen in einer gemeinsamen Öffnung (34) enden.

12. Analysator nach einem der vorhergehenden Ansprüche, **dadurch gekennzeichnet, dass** Bestandteil der der Messwertbildung dienenden Mittel ein Lock-in-Verstärker (36) ist.

13. Analysator nach einem der vorhergehenden Ansprüche, **dadurch gekennzeichnet, dass** Mess- und Referenz-Küvette (2, 3) jeweils aus einem Metall-Rohr - vorzugsweise aus Aluminium - bestehen.

14. Analysator nach Anspruch 13, **dadurch gekennzeichnet, dass** die beiden Rohre zumindest in einem Endbereich derart ausgebildet sind, dass sie mit kontinuierlich sich nähernden Achsen in einer gemeinsamen Öffnung (34, 43) enden.

15. Analysator nach Anspruch 13 oder 14, **dadurch gekennzeichnet, dass** die Innenwandungen der Rohre mit einem reflektierenden Metall beschichtet sind.

16. Analysator nach einem der vorhergehenden Ansprüche, **dadurch gekennzeichnet, dass** dem Detektor (35) ein IR-Licht-Filter (40) vorgelagert ist.

17. Verfahren zum Betrieb eines Gasanalysators mit den Merkmalen eines oder mehrerer der vorhergehenden Ansprüche, bei welchem in den Küvetten (2, 3) abwechselnd IR-Licht-Absorptionsmessungen ausgeführt werden und die von der Untersuchung des Referenzgases in der Referenz-Küvette (3) stammenden Untergrundsignale bei der Messwertbildung berücksichtigt werden.

18. Verfahren nach Anspruch 17, **dadurch gekennzeichnet, dass** die Lock-in-Messtechnik angewendet wird und dass die dazu notwendigen Referenz-Signale von der Modulationseinrichtung (38 bzw. 41) erzeugt werden.

19. Verfahren nach Anspruch 17 oder 18, **dadurch gekennzeichnet, dass** die Eigenschaften des Gasanalysators durch Verwendung von Infrarot-Filtern (40) mit verschiedenen Bandbreiten variiert werden.

## Claims

1. Infrared gas analyser (1), in particular for use as a gas detector for leak detection using a sampling probe, having the following features:
- it is equipped with a test vessel (2) through which the test gas flows;
- it is equipped with an IR light source (4, 5, 42), which produces IR light that passes through the test vessel (2);
- it has a detector (35), which makes it possible to measure the IR light absorption in the test gas;
- besides the test vessel (2) through which the test gas flows, a reference vessel (3) is provided for holding reference gas, to which the same or another light source (4, 5, 42) and the same detector (35) are assigned;
- there are means (38, 41) which cause a modulation of the IR light passing through the vessels (2, 3);
- there are means (36) for forming measurement values, which make it possible for the signals that are obtained by measuring the IR absorption in the gas of the reference vessel (3) to be to taken into account in the signals which are obtained by measuring the IR absorption in the test vessel (2);
- a test-gas intake point is provided, which communicates with the test vessel (2) through a line (17);
- another gas intake point is provided, which is located in the vicinity of the test-gas intake point and communicates with the reference vessel (3) through a line (25);
- in which signals that are obtained when measuring the IR absorption in the gas of the reference vessel (3) are background signals, which make it possible to take background concentrations due to test gases or other perturbing gases into account when forming the measurement values from the signals that are obtained by measuring the IR absorption in the test vessel (2).

2. Analyser according to Claim 1, **characterised in that** the test vessel (2) and the reference vessel (3) each comprise three longitudinal sections (6, 7, 8 and 9, 10, 11, respectively), of which the two input sections (6, 9) are respectively located in the vicinity of the light source(s) (4, 5, 42), two other sections (8, 11) are located on the detector side in the vicinity of the detector (35), and two other sections (7, 10) are located in the central region, and **in that** the test gas or the reference gas flows through each central longitudinal section (7 and 10, respectively).

3. Analyser according to Claim 2, **characterised in that** lines (17, 25) are provided which are used for delivering test gas and reference gas, respectively, and **in that** outflow openings (21 and 27) are provided which open into a vacuum chamber (14).

4. Analyser according to Claim 2 or 3, **characterised in that** the means (38, 41) for modulating the IR light passing through the vessels (2, 3) are located in the vicinity of the input sections (6, 9).

5. Analyser according to Claim 4, **characterised in that** a light source (4 and 5, respectively) is assigned to each of the input sections (6, 9) of the vessels (2, 3), and **in that** a frequency generator (38) is provided for modulating the two IR light sources (4, 5).

6. Analyser according to Claim 4, **characterised in that** only one light source (42) is provided, the light from which is delivered to the vessels (2, 3) via a beam splitter (46), and **in that** a mechanical chopper is provided for modulating the IR light.

7. Analyser according to Claim 3 and one of Claims 4, 5 or 6, **characterised in that** in the input sections (6, 9) extend into the vacuum chamber (14) and are internally sealed by windows (22, 28) that transmit IR light.

8. Analyser according to Claims 2 and 3 and one of Claims 4 - 7, **characterised in that** the sections (8, 11) on the detector sides of the vessels (2, 3) also extend into the vacuum chamber (14) and are internally sealed by windows (31, 32) that transmit IR light.

9. Analyser according one of Claims 1 to 8, **characterised in that** the IR light passing through the vessels (2, 3) is concentrated on the detector surface by means of a focusing device (12).

10. Analyser according to Claim 9, **characterised in that** a parabolic mirror is provided as the focusing device (12).

11. Analyser according to Claims 8 and 9, **characterised in that** the sections (8, 11) on the detector sides of the vessels (2, 3) are designed to form the focusing device (12), such that they end with continuously converging axes in a common opening (34).

12. Analyser according one of the preceding claims, **characterised in that** a lock-in amplifier (36) is a component of the means used to form the measurement values.

13. Analyser according one of the preceding claims, **characterised in that** the test and reference vessels (2, 3) each consist of a metal tube - preferably made of aluminium.

14. Analyser according to Claim 13, **characterised in that** the two tubes are designed, at least in an end region, such that they end with continuously converging axes in a common opening (34, 43).

15. Analyser according to Claim 13 or 14, **characterised in that** the inner walls of the tubes are coated with a reflective metal.

16. Analyser according one of the preceding claims, **characterised in that** an IR filter (40) is placed in front of the detector (35).

17. Method for operating a gas analyser having the features of one or more of the preceding claims, in which IR light absorption measurements are alternately carried out in the vessels (2, 3), and the background signals obtained by studying the reference gas in the reference vessel (3) are taken into account when forming the measurement values.

18. Method according to Claim 17, **characterised in that** the lock-in measurement technique is used, and **in that** the reference signals needed for this are produced by the modulation device (38 or 41).

19. Method according to Claim 17 or 18, **characterised in that** the properties of the gas analyser are varied by using infrared filters (40) with different bandwidths.

## Revendications

1. Analyseur de gaz à infrarouge (1) en particulier pour un emploi en tant que détecteur de gaz lors de la recherche de fuites par reniflage, comportant les caractéristiques suivantes :
- il est équipé d'une cuvette de mesure (2) traversée par le gaz de mesure ;
- il est équipé d'une source de lumière IR (4, 5, 42) qui génère la lumière IR emplissant la cuvette de mesure (2) ;
- il présente un détecteur (35) qui permet la mesure de l'absorption de lumière IR dans le gaz de mesure ;
- outre la cuvette de mesure (2) traversée par le gaz de mesure, une cuvette de référence (3) est prévue pour la réception de gaz de référence, à laquelle sont associés la même ou une autre source de lumière (4, 5, 42) ainsi que le même détecteur (35) ;
- il est prévu des moyens (38, 41) qui provoquent une modulation de la lumière IR emplissant les cuvettes (2, 3) ;
- il est prévu des moyens (36) de formation de valeur de mesure qui permettent une prise en compte des signaux obtenus par la mesure de l'absorption IR dans le gaz de la cuvette de référence (3), dans le cas des signaux obtenus par la mesure de l'absorption IR dans le gaz de la cuvette de mesure (2) ;
- un emplacement d'aspiration de gaz de mesure est prévu qui est en liaison avec la cuvette de mesure (2) au moyen d'une canalisation (17) ;
- un autre emplacement d'aspiration de gaz est prévu, se trouvant dans le voisinage de l'emplacement d'aspiration de gaz de mesure et qui est en liaison avec la cuvette de référence (3) au moyen d'une canalisation (25) ;
- dans le cas des signaux obtenus par la mesure de l'absorption IR dans le gaz de la cuvette de référence (3), il s'agit de signaux de fond qui permettent la prise en compte des concentrations de fond causées par des gaz de mesure ou d'autres gaz perturbateurs lors de la formation de valeur de mesure à partir des signaux obtenus par la mesure de l'absorption IR dans le gaz de la cuvette de mesure (2).

2. Analyseur selon la revendication 1, **caractérisé en ce que** la cuvette de mesure (2) et la cuvette de référence (3) comprennent respectivement trois sections longitudinales (6, 7, 8 ou 9, 10, 11), dont, respectivement deux sections d'entrée (6, 9) se trouvent dans la(les) zone(s) de la source de lumière (4, 5, 42), deux autres sections côté détecteur (8, 11) dans la zone du détecteur (35) et deux autres sections (17, 10) dans la zone médiane, et que la section longitudinale respectivement médiane (7 ou 10) est traversée par le gaz de mesure ou le gaz de référence.

3. Analyseur selon la revendication 2, **caractérisé en ce que** des canalisations (17, 25) sont prévues qui servent à apporter le gaz de mesure ou le gaz de référence et **en ce que** des ouvertures d'évacuation (21 ou 27) sont prévues qui débouchent à l'intérieur d'une chambre à vide (14).

4. Analyseur selon la revendication 2 ou 3, **caractérisé en ce que** les moyens (38, 41) de modulation de la lumière IR emplissant les cuvettes (2, 3) se trouvent dans la zone des sections d'entrée (6, 9).

5. Analyseur selon la revendication 4, **caractérisé en ce qu'**une source de lumière respective (4 ou 5) est associée à chacune des sections d'entrée (6, 9) des cuvettes (2, 3) et **en ce qu'**un générateur de fréquences (38) est prévu pour la modulation des deux sources de lumière IR (4, 5).

6. Analyseur selon la revendication 4, **caractérisé en ce qu'**une seule source de lumière (42) est prévue dont la lumière est apportée aux cuvettes (2, 3) par un fractionneur de rayons (46) et **en ce qu'**un hacheur mécanique est prévu pour la modulation de la lumière IR.

7. Analyseur selon la revendication 3 et l'une quelconque des revendications 4, 5 ou 6, **caractérisé en ce que** les sections d'entrée (6, 9) font saillie à l'intérieur de la chambre à vide (14) et sont étanchéisées à l'intérieur par des fenêtres transparentes à la lumière IR (22, 28).

8. Analyseur selon les revendications 2 et 3 et l'une quelconque des revendications 4 à 7, **caractérisé en ce que** les sections côté détecteur (8, 11) des cuvettes (2, 3) font également saillie à l'intérieur de la chambre à vide (14) et sont étanchéisées à l'intérieur par des fenêtres transparentes à la lumière IR (31, 32).

9. Analyseur selon l'une quelconque des revendications 1 à 8, **caractérisé en ce que** la lumière emplissant les cuvettes (2 et 3) est concentrée sur la surface de détecteur par un dispositif de focalisation (12).

10. Analyseur selon la revendication 9, **caractérisé en ce qu'**un miroir parabolique est prévu en tant que dispositif de focalisation (12).

11. Analyseur selon les revendications 8 et 9, **caractérisé en ce que** les sections côté détecteur des cuvettes (2, 3) sont constituées de telle manière que pour former le dispositif de focalisation (12), elles se terminent dans une ouverture commune (34) avec des axes se rapprochant de façon continue.

12. Analyseur selon l'une quelconque des revendications précédentes, **caractérisé en ce qu'**un amplificateur « lock in » (36) fait partie des moyens de formation de valeur.

13. Analyseur selon l'une quelconque des revendications précédentes, **caractérisé en ce que** les cuvettes de référence et de mesure (2, 3) se composent chaque fois d'un tuyau métallique, de préférence en aluminium.

14. Analyseur selon la revendication 13, **caractérisé en ce que** les deux tuyaux sont constitués en au moins une zone d'extrémité de telle manière qu'ils se terminent dans une ouverture commune (34, 43) avec des axes se rapprochant de façon continue.

15. Analyseur selon la revendication 13 ou 14, **caractérisé en ce que** les parois intérieures des tuyaux sont recouvertes d'un métal réfléchissant.

16. Analyseur selon l'une quelconque des revendications précédentes, **caractérisé en ce qu'**un filtre de lumière IR (40) est situé en amont du détecteur (35).

17. Procédé d'exploitation d'un analyseur de gaz possédant les caractéristiques de l'une ou de plusieurs des revendications précédentes, dans lequel sont effectuées en alternance des mesures d'absorption de lumière IR dans les cuvettes (2,3) et sont pris en compte lors de la formation de valeur de mesure les signaux de fond provenant de l'examen du gaz de référence dans la cuvette de référence (3).

18. Procédé selon la revendication 17, **caractérisé en ce que** la technique de mesure « lock in » est utilisée et **en ce que** les signaux de référence nécessaires pour cela sont générés par le dispositif de modulation (38 ou 41).

19. Procédé selon la revendication 17 ou 18, **caractérisé en ce que** les propriétés de l'analyseur de gaz sont modifiées par l'utilisation de filtres infrarouge (40) avec différentes largeurs de bande.
